# DEMANDE DE BREVET EUROPEEN

(11) **EP 4 518 125 A1**
(43) Date de publication de la demande: **05.03.2025**
(21) Numéro de dépôt: 24198091.1
(22) Date de dépôt: 03.09.2024
(51) Int. Cl.: H02M 3/00, H02M 3/335

(54) **DISPOSITIF DE CONVERSION CONTINU-CONTINU, SYSTÈME ELECTRIQUE AVEC UN TEL DE DISPOSITIF DE CONVERSION CONTINU-CONTINU ET ENGIN DE MOBILITE**

(30) Priorité: 03.09.2023 FR 2309231
(71) Demandeur: Valeo eAutomotive Germany GmbH, 91056 Erlangen (DE)
(72) Inventeur: SMAL, Pierre, 95892 CERGY PONTOISE (FR); JOLIET, Jean-Francois, 95892 CERGY PONTOISE (FR); COIA, Arnaud, 95892 CERGY PONTOISE (FR)
(74) Mandataire: Valeo Powertrain Systems

(57) **Abrégé**

Ce dispositif (800) comporte : - des premier et deuxième convertisseurs continu-continu (112a, 112b) comportant chacun : un transformateur (Ta, Tb), un circuit primaire (CPa, CPb) conçu pour opérer à haute tension, un circuit secondaire (CSa, CSb) conçu pour opérer à basse tension, le circuit secondaire (CSa, CSb) comportant au moins un élément de commutation et un circuit de commande (CCa, CCb) conçu pour commander l'élément de commutation ; et - un circuit basse tension (CBT) porté par la carte électronique (1102) et incluant au moins les circuits secondaires (CSa, CSb).

Il existe un quadrilatère (Q) avec quatre sommets situés respectivement sur les deux broches des transformateurs, les circuits primaires haute tension et les bobines primaires des transformateurs s'étendant hors du quadrilatère (Q) ; au moins un circuit de commande (CCa, CCb) s'étend d'un côté du quadrilatère (Q) ; et le dispositif (800) comporte un composant situé d'un autre côté du quadrilatère (Q), ainsi qu'une connexion (1202a, 1202b) entre le circuit de commande et le composant, cette connexion (1202a, 1202b) traversant le quadrilatère (Q) au travers des deux lignes (L1, L2).

## Description

### Domaine technique de l'invention

La présente invention concerne un dispositif de conversion continu-continu, un système électrique avec un tel de dispositif de conversion continu-continu et un engin de mobilité.

Un engin de mobilité est par exemple un véhicule terrestre à moteur, un train, un aéronef ou bien un drone. Un véhicule terrestre à moteur est par exemple un véhicule automobile, une moto, un vélo motorisé ou bien un fauteuil roulant motorisé.

### Arrière-plan technologique

On connait de l'état de la technique un dispositif de conversion continu-continu, comportant :
- une carte électronique ;
- des premier et deuxième convertisseurs continu-continu comportant chacun :
   - un transformateur porté par la carte électronique, avec : - une bobine primaire, - une bobine secondaire, - au moins une broche d'une borne de première extrémité de la bobine secondaire, et - au moins une broche d'une borne de deuxième extrémité de la bobine secondaire ;
   - un circuit primaire porté par la carte électronique et connecté à la bobine primaire du transformateur et conçu pour opérer à haute tension ;
   - un circuit secondaire porté par la carte électronique et connecté à la bobine secondaire du transformateur et conçu pour opérer à basse tension, le circuit secondaire comportant au moins un élément de commutation ;
   - un circuit de commande porté par la carte électronique et conçu pour commander l'élément de commutation ;
- un circuit basse tension porté par la carte électronique et incluant au moins les circuits secondaires.

Le circuit de commande a généralement besoin d'être connecté à d'autres composants, par exemple à l'élément de commutation ou bien à un pilote de ce dernier, ou bien à des capteurs. Ces composants sont parfois éloignés du circuit de commande sur la carte électronique. La présence des circuits primaires fonctionnant à haute tension rend difficile le routage entre le circuit de commande et ces composants. En effet, le fait de traverser un circuit haute tension nécessite de garder des distances d'isolation importantes, qui s'oppose à la compacité recherchée sur une carte électronique.

Il peut ainsi être souhaité de prévoir un dispositif de conversion continu-continu qui permette de s'affranchir d'au moins une partie des problèmes et contraintes précités.

### Résumé de l'invention

Il est donc proposé un dispositif de conversion continu-continu, comportant :
- une carte électronique ;
- des premier et deuxième convertisseurs continu-continu comportant chacun :
   - un transformateur porté par la carte électronique, avec : - une bobine primaire, - une bobine secondaire, - au moins une broche d'une borne de première extrémité de la bobine secondaire, et - au moins une broche d'une borne de deuxième extrémité de la bobine secondaire ;
   - un circuit primaire porté par la carte électronique et connecté à la bobine primaire du transformateur et conçu pour opérer à haute tension ;
   - un circuit secondaire porté par la carte électronique et connecté à la bobine secondaire du transformateur et conçu pour opérer à basse tension, le circuit secondaire comportant au moins un élément de commutation ;
   - un circuit de commande porté par la carte électronique et conçu pour commander l'élément de commutation ;
- un circuit basse tension porté par la carte électronique et incluant au moins les circuits secondaires ;
caractérisé en ce que :
- il existe un quadrilatère avec quatre sommets situés respectivement sur la broche de la borne de première extrémité de la bobine secondaire du premier transformateur, la broche de la borne de deuxième extrémité de la bobine secondaire du premier transformateur, la broche de la borne de première extrémité de la bobine secondaire du deuxième transformateur et la broche de la borne de deuxième extrémité de la bobine secondaire du deuxième transformateur, les circuits primaires haute tension et les bobines primaires des transformateurs s'étendant hors du quadrilatère ;
- au moins un circuit de commande s'étendant d'un côté en dehors de première et deuxième lignes formant des côtés du quadrilatère s'étendant d'un transformateur à l'autre ; et
- le dispositif de conversion continu-continu comporte un composant situé en dehors du quadrilatère d'un autre côté des lignes que le circuit de commande, ainsi qu'une connexion entre le circuit de commande et le composant, cette connexion traversant le quadrilatère au travers des deux lignes.

Ainsi, grâce à l'invention, il est possible de connecter le circuit de commande en passant entre les transformateurs et en évitant ainsi les circuits primaires connectés aux bobines primaires de ces transformateurs.

Par un circuit s'étend d'un côté en-dehors de première et deuxième lignes formant des côtés du quadrilatère on entend que la projection orthogonale du circuit dans le plan de la carte électronique n'a pas d'intersection avec les côtés du quadrilatère définis par lesdites lignes et s'étend en dehors du quadrilatère.

L'invention peut en outre comporter l'une ou plusieurs des caractéristiques optionnelles suivantes, selon toute combinaison techniquement possible.

De façon optionnelle, le premier convertisseurs continu-continu est conçu pour convertir une première tension d'entrée en une tension de sortie.

De façon optionnelle, le deuxième convertisseurs continu-continu est conçu pour convertir une deuxième tension d'entrée en la même tension de sortie que le premier convertisseur de tension continu-continu.

De façon optionnelle également, le composant est l'élément de commutation ou bien un pilote de cet élément de commutation.

De façon optionnelle également, le composant est un capteur de courant ou bien de température ou bien de tension et la connexion est conçue pour fournir les mesures du capteur au circuit de commande.

De façon optionnelle également, le dispositif de conversion continu-continu comprend en outre une capacité de sortie ayant au moins un élément capacitif et conçue pour présenter entre deux bornes une tension de sortie du premier et du deuxième convertisseur continu-continu et dans lequel le circuit basse tension comporte dans le quadrilatère ledit élément capacitif.

De façon optionnelle également, la connexion est formée au moins en partie par une couche interne de la carte électronique.

De façon optionnelle également, le quadrilatère est un rectangle.

De façon optionnelle également, les circuits de commande se trouvent d'un même côté du quadrilatère.

Il est également proposé un système électrique comportant :
- une première et une deuxième source de tension continue ; et
- un dispositif de conversion continu-continu selon l'invention dans lequel le premier convertisseur continu-continu est connecté à la première source de tension continue pour recevoir sa tension d'entrée et dans lequel le deuxième convertisseur continu-continu est connecté à la deuxième source de tension continue pour recevoir sa tension d'entrée.

Il est également proposé un engin de mobilité comportant un dispositif de conversion continu-continu selon l'invention ou bien un système électrique selon l'invention.

### Brève description des figures

L'invention sera mieux comprise à l'aide de la description qui va suivre, donnée uniquement à titre d'exemple et faite en se référant aux dessins annexés dans lesquels :
- la figure 1 est une vue très simplifiée d'un engin de mobilité dans lequel l'invention peut être mise en oeuvre,
- la figure 2 est un circuit électrique d'un convertisseur continu-continu selon un premier mode de réalisation avec un onduleur, un circuit résonant et un redresseur,
- la figure 3 présente un exemple d'un circuit de découpage et d'un redresseur d'un convertisseur continu-continu de la figure 2,
- la figure 4 regroupe des chronogrammes de grandeurs électriques du convertisseur continu-continu des figures 2 et 3 lorsque la variable de commande est un décalage de phase,
- la figure 5 regroupe des chronogrammes de grandeurs électriques du convertisseur continu-continu des figures 2 et 3 lorsque la variable de commande est un décalage de phase en l'absence de passage dans le second mode selon l'invention,
- la figure 6 est un circuit d'un autre exemple de redresseur pour le convertisseur continu-continu des figures 2 et 3,
- la figure 7 est une vue fonctionnelle d'un système informatique pouvant être utilisé dans le convertisseur continu-continu,
- la figure 8 est un circuit électrique d'un dispositif de conversion continu-continu selon un deuxième mode de réalisation,
- la figure 9 est un circuit électrique d'un transformateur et d'un redresseur du dispositif de conversion continu-continu du second mode de réalisation,
- la figure 10 est une vue de dessus du dispositif de conversion continu-continu de la figure 9 lorsque celui-ci est monté sur une carte électronique,
- la figure 11 est un agrandissement de la vue de la figure 10, illustrant en particulier un agencement de deux transformateurs du dispositif de conversion continu-continu,
- la figure 12 est une vue simplifiée d'un autre exemple d'agencement des transformateurs, et
- la figure 13 est une vue simplifiée d'encore un autre exemple d'agencement des transformateurs.

### Description détaillée de l'invention

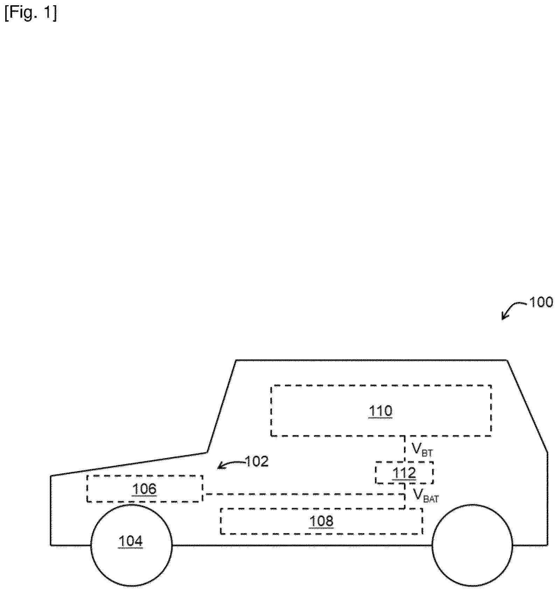

En référence à la figure 1, un engin de mobilité 100 dans lequel l'invention peut être utilisée, va à présent être décrit.

L'engin de mobilité 100 comporte un système de propulsion 102, par exemple des roues motrices 104 et un moteur électrique 106 conçu pour entraîner les roues motrices 104. L'engin de mobilité 100 comporte en outre une batterie 108 conçue par exemple pour alimenter électriquement le moteur électrique 106. La batterie 108 est conçue pour fournir une tension continue, appelée tension de batterie V_{BAT}. Cette dernière est une haute tension, c'est-à-dire supérieure à 100 V, de préférence supérieure à 150 V. Ainsi, a contrario, une basse tension est une tenson inférieure à 100V.

L'engin de mobilité 100 comporte en outre un réseau basse tension 110 conçu pour être alimenté par une tension continue, appelée tension réseau V_{BT}. Une basse tension est une tension inférieure ou égale à 100 V, de préférence inférieure ou égale à 60 V.

Pour obtenir la tension réseau V_{BT} à partir de la tension de batterie V_{BAT}, l'engin de mobilité comporte un convertisseur continu-continu 112 conçu pour convertir la tension de batterie V_{BAT} en la tension de réseau V_{BT}. La tension de batterie V_{BAT} et la tension de réseau V_{BT} forment ainsi respectivement une tension d'entrée et une tension de sortie du convertisseur continu-continu 112.

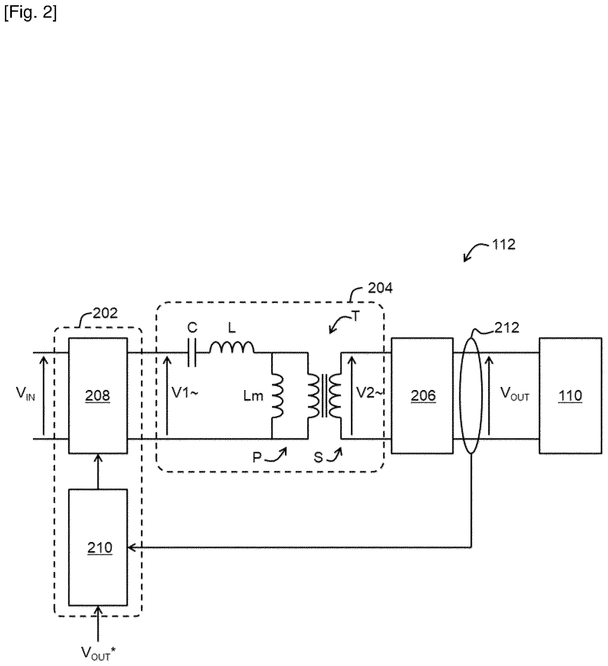

En référence à la figure 2, un exemple de convertisseur continu-continu 112 va à présent être décrit.

Le convertisseur continu-continu 112 est un convertisseur LLC et comporte ainsi tout d'abord un onduleur 202, un circuit résonant 204 et un redresseur 206.

L'onduleur 202 conçu pour convertir une tension d'entrée V_{IN} (la tension de batterie V_{BAT} lorsqu'utilisé dans le cadre de la figure 1) en une première tension intermédiaire V1~ alternative.

Plus précisément, l'onduleur 202 comporte un circuit de découpage 208 et un dispositif de commande 210 conçu pour commander le circuit de découpage 208 afin de maintenir une tension de sortie V_{OUT} (la tension V_{BT} lorsqu'utilisé dans le cadre de la figure 1) à une consigne V_{OUT}* souhaitée, reçue par le dispositif de commande 210.

Le circuit résonant 204 comporte un transformateur T, ainsi qu'une capacité C et une inductance L en série avec une bobine primaire P du transformateur T et la première tension intermédiaire V1~. Le transformateur T présente une inductance magnétisante Lm. Ainsi, la capacité C et les inductances L, Lm définissent une fréquence de résonance F_{R} du circuit résonant 204, valant par exemple entre 80 et 120 kHz, par exemple 100 kHz .

Le redresseur 206 est connecté à une bobine secondaire S du transformateur T, conçu pour présenter une deuxième tension intermédiaire V2~ alternative. Le redresseur 206 est ainsi conçu pour convertir cette deuxième tension intermédiaire V2- présente à la bobine secondaire S du transformateur T en la tension de sortie V_{OUT}. Dans certains modes de réalisation, le redresseur 206 peut comporter un ou plusieurs commutateurs commandables (par exemple à transistor), par exemple commandés par le circuit de commande 210.

Le convertisseur continu-continu 112 comporte en outre par exemple un capteur de tension 212 conçu pour mesurer la tension de sortie V_{OUT} et fournir cette mesure au dispositif de commande 210, afin que ce dernier régule la tension de sortie V_{OUT} à la consigne V_{OUT}*.

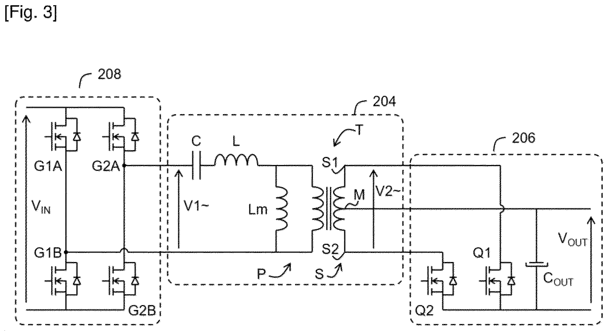

En référence à la figure 3, un exemple de circuit de découpage 208 et de redresseur 206 va à présent être décrit.

Dans cet exemple, le circuit de découpage 208 comporte un pont complet de commutateurs commandables G1A, G1B, G2A, G2B, par exemple des transistors commandables. Ainsi, le circuit de découpage 208 comporte deux bras de commutation. Chaque bras de commutation comporte deux commutateurs G1A, G1B et G2A, G2B connectés l'un à l'autre en un point milieu et présentant ensemble la tension d'entrée V_{IN}. La première tension intermédiaire V1~ est ainsi présente entre les deux points milieux des deux bras de commutation.

De son côté, toujours dans cet exemple, le redresseur 206 comporte une capacité C_{OUT} dont une première borne est connectée à une borne médiane M de la bobine secondaire S du transformateur T. Le redresseur 206 comporte en outre deux commutateurs Q1, Q2, comme des transistors commandables ou bien des diodes, connectés entre respectivement l'une des deux bornes d'extrémité S1, S2 de la bobine secondaire S du transformateur T, et une deuxième borne de la capacité C_{OUT} connectée à une masse électrique. En outre, chacun des deux commutateurs Q1 et Q2 est connecté à une borne d'extrémité S1, S2 différente.

Le dispositif de commande 210 est conçu pour commander le circuit de découpage 208 selon sélectivement des premier et deuxième modes.

Dans le premier mode, le circuit de découpage 208 est commandé à une fréquence de découpage F_{D} fixe et sensiblement égale à la fréquence de résonance F_{R}, par exemple égale à la fréquence de résonance F_{R} à 5% près, de préférence à 1% près, de préférence sous la fréquence de résonance F_{R}.

Par exemple, le circuit de découpage 208 est commandé en modifiant une variable de commande. Par exemple, dans le cas où l'onduleur 202 comporte deux bras de commutation comme illustré sur la figure 3, le premier mode est un mode de modulation de décalage de phase où la variable de commande peut être un décalage de phase PHI entre les deux bras de commutation, le rapport cyclique pour chacun des bras de commutation étant par exemple fixé à 50%.

En utilisant la fréquence de découpage F_{D} proche de la fréquence de résonance F_{R}, une très grande efficacité peut être obtenue. Par exemple, un rendement de puissance supérieur à 90% peut être obtenu. Cependant, cette méthode n'est pas possible en dessous d'un certain niveau de tension d'entrée V_{IN}.

Par exemple, dans le cas d'utilisation du décalage de phase PHI, plus la tension d'entrée V_{IN} baisse, plus il est nécessaire d'augmenter le décalage de phase PHI. Cependant, le décalage de phase PHI ne peut être augmenté que jusqu'à 180°.

Dans le deuxième mode, le circuit de découpage 208 est commandé en modifiant la fréquence de découpage F_{D} sous la fréquence de résonance F_{R}. L'utilisation d'une fréquence de découpage F_{D} inférieure à la fréquence de résonance F_{R} permet d'augmenter le gain entre la tension d'entrée V_{IN} et la tension de sortie V_{OUT}, et donc d'atteindre la consigne V_{OUT}* souhaitée, même à des niveaux de tensions d'entrée V_{IN} trop faible pour continuer à fonctionner à la fréquence de résonance F_{R}.

Par exemple, dans ce deuxième mode, la variable de commande, par exemple le décalage de phase PHI, est maintenue fixe.

Pour passer du premier mode au deuxième mode, le dispositif de commande 210 est par exemple conçu pour détecter lorsque la variable de commande atteint un seuil, par exemple pour détecter lorsque le décalage de phase PHI, lorsqu'il est utilisé, atteint 180°. Pour passer du deuxième mode au premier mode, le dispositif de commande 210 est par exemple conçu pour détecter lorsque la fréquence de découpage F_{D} atteint sensiblement la fréquence de résonance F_{R}, par exemple à 5% près, de préférence à 1 % près.

Alternativement, le dispositif de commande 210 pourrait être conçu pour passer d'un mode à l'autre en comparant la tension d'entrée V_{IN} à un seuil : le dispositif de commande 210 serait dans le premier mode lorsque la tension d'entrée serait supérieure à ce seuil, et dans le deuxième mode lorsque la tension d'entrée serait inférieure à ce seuil.

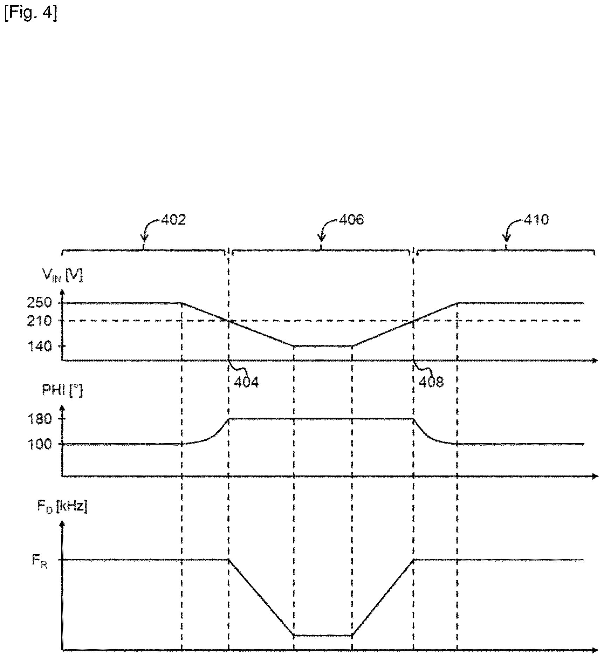

Ainsi, en référence à la figure 4, un exemple de fonctionnement du dispositif de commande 210 va à présent être décrit, plus particulièrement dans le cas où la variable de commande est le décalage de phase PHI.

Initialement, dans une phase 402, le dispositif de commande 210 commande le circuit de découpage 208 selon le premier mode, c'est-à-dire avec la fréquence de découpage F_{D} sensiblement égale à la fréquence de résonance F_{R}. La régulation de la tension de sortie V_{OUT} est obtenue en modifiant le décalage de phase PHI. En particulier, lorsque la tension d'entrée V_{IN} diminue, le décalage de phase PHI est augmenté.

À un instant 404, le décalage de phase atteint un seuil S prédéfini, par exemple 180°.

Le dispositif de commande 210 détecte que ce seuil S est atteint par le décalage de phase PHI et commande alors, dans une phase 406, le circuit de découpage 208 selon le deuxième mode, c'est-à-dire en modifiant la fréquence de découpage F_{D} sous la fréquence de résonance F_{R}. En particulier, plus la tension d'entrée V_{IN} diminue, plus la fréquence de découpage F_{D} est diminuée. Inversement, lorsque la tension d'entrée V_{IN} augmente, la fréquence de découpage F_{D} est augmentée.

À un instant 408, la fréquence de découpage F_{D} atteint sensiblement la fréquence de résonance F_{R}.

Le dispositif de commande 210 détecte que la fréquence de résonance F_{R} est atteinte et commande alors à nouveau, dans une phase 410, le circuit de découpage 208 selon le premier mode.

Dans l'exemple de la figure 4, la bascule d'un mode à l'autre se fait autour de 210 V. Ainsi, alternativement, le dispositif de commande 210 pourrait passer d'un mode à l'autre suivant que la tension d'entrée V_{IN} est supérieure ou inférieur à ce seuil de 210 V, comme expliqué précédemment.

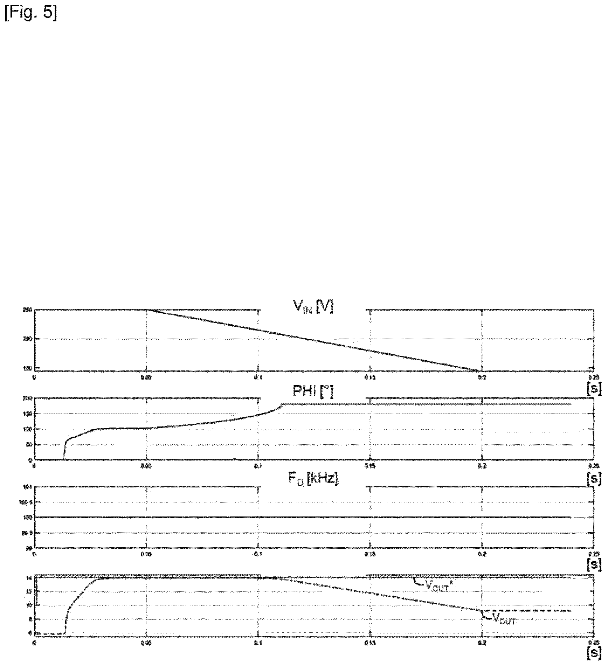

En référence à la figure 5, en l'absence du passage dans le second mode, lorsque la tension d'entrée V_{IN} devient trop faible (en dessous d'environ 210 V dans l'exemple illustré) et qu'il n'est plus possible de jouer sur le décalage de phase PHI car il est à son maximum de 180°, la tension de sortie V_{OUT} n'arrive plus à suivre la consigne V_{OUT}* et baisse donc en même temps que la tension d'entrée V_{IN}, jusqu'à atteindre, dans l'exemple illustré, une asymptote lorsque la tension d'entrée V_{IN} se stabilise.

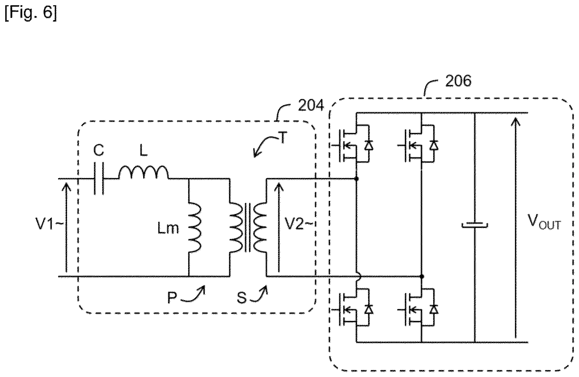

En référence à la figure 6, un autre exemple de redresseur 206 va à présent être décrit.

Dans cet exemple, le redresseur 206 comporte un pont complet d'éléments de commutation, par exemple des transistors commandables. Alternativement, les éléments de commutation pourrait être des diodes.

Le redresseur 206 de la figure 6 fonctionne de la façon décrite précédemment pour le redresseur 206 de la figure 3.

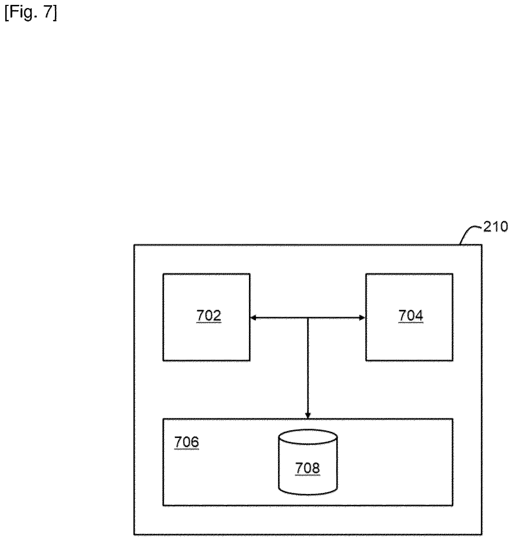

En référence à la figure 7, le dispositif de commande 210 peut être un système informatique comportant une unité 702 de traitement de données (telle qu'un microprocesseur) et une mémoire principale 704 (telle qu'une mémoire RAM, de l'anglais « Random Access Memory ») accessible par l'unité de traitement 702. Le système informatique comporte en outre par exemple une interface réseau et/ou un support lisible par ordinateur, comme par exemple un support local (tel qu'un disque dur local 706) ou bien un support distant (tel qu'un disque dur distant et accessible via par l'interface réseau au travers d'un réseau de communication) ou bien encore un support amovible (tel qu'une clé USB, de l'anglais « Universal Serial Bus », ou bien un CD, de l'anglais « Compact Disc » ou bien un DVD, de l'anglais « Digital Versatile Disc ») lisible au moyen d'un lecteur approprié du système informatique (tel qu'un port USB ou bien un lecteur de disque CD et/ou DVD). Un programme d'ordinateur 708 contenant des instructions pour l'unité de traitement 702 est enregistré sur le support 706 et/ou téléchargeable via l'interface réseau. Ce programme d'ordinateur 708 est par exemple destiné à être chargé dans la mémoire principale 704, afin que l'unité de traitement 702 exécute ses instructions.

Alternativement, tout ou partie du programme d'ordinateur 708 pourrait être implémenté sous forme de modules matériels, c'est-à-dire sous forme d'un circuit électronique, par exemple micro-câblé, ne faisant pas intervenir de programme d'ordinateur.

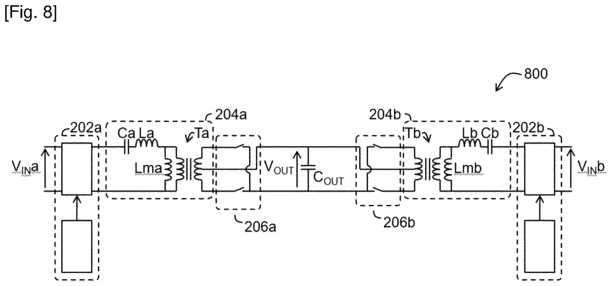

En référence à la figure 8, un dispositif de conversion continu-continu 800 va à présent être décrit. Le dispositif 800 peut par exemple remplacer le convertisseur 112 dans l'engin de mobilité 100 de la figure 1.

Le dispositif 800 reprend le convertisseur de tension 112, en le dédoublant pour obtenir une redondance. Le dispositif 800 comporte donc deux convertisseurs de tension 112a, 112b. Ainsi, les références utilisées dans les figures précédentes seront reprises, en ajoutant la lettre « a » pour les éléments du convertisseur de tension 112a et la lettre « b » pour les éléments du convertisseur de tension 112b.

Seule la capacité de sortie C_{OUT} n'est pas dédoublée, mais commune aux deux convertisseurs 112a, 112b.

Le dispositif 800 est ainsi conçu pour recevoir deux tensions d'entrée V_{IN}a, V_{IN}b pour fournir une tension de sortie V_{OUT}. Lorsqu'utilisé dans le cadre de la figure 1, les tensions d'entrée V_{IN}a, V_{IN}b valent par exemple chacune la moitié de la tension de batterie V_{BAT}. Alternativement, les tensions d'entrée pourraient être toutes les deux égales à la tension de batterie V_{BAT}.

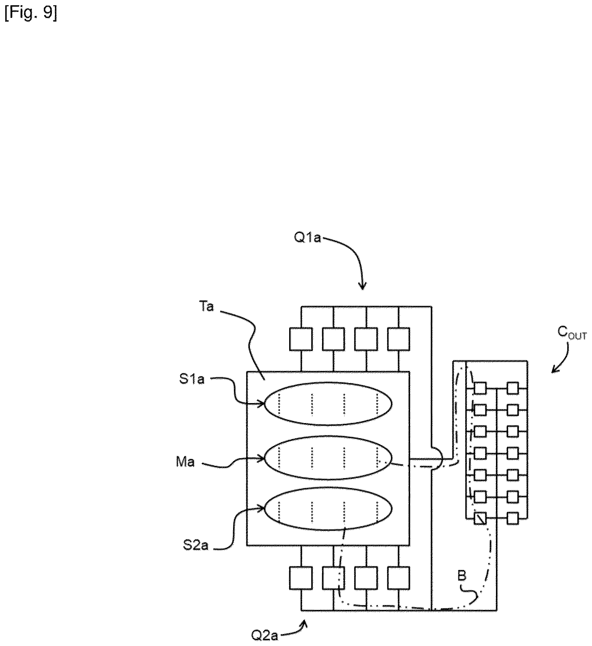

En référence à la figure 9, le dispositif 800 comporte au moins une boucle B passant par la capacité de sortie C_{OUT} et s'étendant d'une borne à une autre de la bobine secondaire Sa du transformateur Ta.

Sur la figure 9, la boucle B s'étend de la borne de deuxième extrémité S2b à la borne médiane Mb et passe en outre par le commutateur Q2a.

Plus précisément, chaque borne S1a, S2a, Ma comporte au moins une broche, quatre dans l'exemple illustré, représentées en pointillées. Par ailleurs, la capacité de sortie C_{OUT} comporte un ou plusieurs éléments capacitifs et chaque commutateur Q2a, Q2b comporte un ou plusieurs éléments de commutation. Les éléments capacitifs sont par exemple en parallèle les uns des autres. En outre, les éléments capacitifs peuvent être répartis dans au moins deux alignements, comme dans l'exemple illustré où ils sont répartis dans deux alignements, par exemple parallèles. De préférence chaque alignement comporte au moins trois éléments capacitifs. De préférence encore, tous les alignements comportent un même nombre d'éléments capacitifs.

Ainsi, la boucle B s'étend d'une des broches de la borne médiane Ma à l'une des broches de la borne de deuxième extrémité S2a, en passant par l'un des éléments de commutation du commutateur Q2a et par au moins un des éléments capacitifs.

Il est en outre possible de définir d'autres boucles comme la boucle B, suivant les broches reliées, le commutateur Q2a ou Q2b par lequel passe la boucle, l'élément de commutation de ce commutateur Q2a ou Q2b par lequel passe la boucle, et l'élément capacitif de la capacité de sortie C_{OUT} par lequel la boucle passe. Par exemple, il est possible de définir une autre boucle s'étendant de la borne médiane Ma à la borne de première extrémité S1a et passant par l'élément de commutation Q1a et l'un des éléments capacitifs de la capacité de sortie C_{OUT}.

Des boucles peuvent être définies de manière similaire pour le transformateur Tb.

Pour minimiser l'inductance parasite de sortie, la capacité de sortie C_{OUT} est placée suffisamment proche des bobines secondaires Sa, Sb des deux transformateurs Ta, Tb, pour que, pour chaque transformateur Ta, Tb, au moins une boucle possible, de préférence chacune des boucles possibles, présente une inductance d'au plus 20 nanohenry (nH).

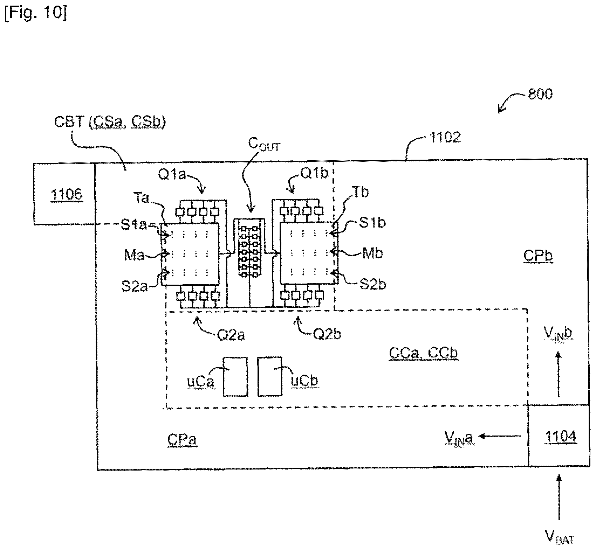

En référence à la figure 10, le dispositif 800 comporte une carte électronique 1102 sur une même face de laquelle les transformateurs Ta, Tb, les éléments capacitifs de la capacité de sortie C_{OUT} et les éléments de commutation des commutateurs Q1a, Q2a, Q1b, Q2b sont montés.

La carte électronique 1102 comporte une entrée haute tension 1104 conçue pour recevoir la tension de batterie V_{BAT} et la diviser en les tensions d'entrée V_{IN}a, V_{IN}b, et une sortie basse tension 1106 conçue pour fournir la tension de sortie V_{OUT}.

Pour chaque convertisseur 112a, 112b, la carte électronique 1102 porte un circuit primaire CPa, CPb, un circuit secondaire Csa, CSb et un circuit de commande CCA, CCb.

Le circuit primaire CPa, CPb est connecté entre l'entrée haute tension 1104 et la bobine primaire Pa, Pb du transformateur Ta, Tb. Ce circuit primaire CPa, CPb comporte en particulier le circuit à découpage 202a, 202b et le circuit résonant 204a, 204b et est conçu pour opérer à haute tension.

Le circuit secondaire CSa, CSb est connecté entre la bobine secondaire Sa, Sb du transformateur Ta, Tb et la sortie basse tension 1106. Ce circuit secondaire CSa, CSb comporte en particulier le redresseur 206a, 206b et est conçu pour opérer à basse tension. Le circuit secondaire CSa, CSb comporte ainsi au moins un élément de commutation, à savoir celui ou ceux des commutateurs Q1a, Q2a, Q1b, Q2b.

Le circuit de commande CCa est conçu pour commander les éléments de commutation des commutateurs Q1a, Q2a. Il comporte pour cela par exemple un microcontrôleur uCa. De même, le circuit de commande CCb est conçu pour commander les éléments de commutation des commutateurs Q1b, Q2b. Il comporte pour cela par exemple un microcontrôleur uCb.

Les circuits secondaires CSa, CSb font ainsi partie d'un circuit basse tension CBT porté par la carte électronique 1102.

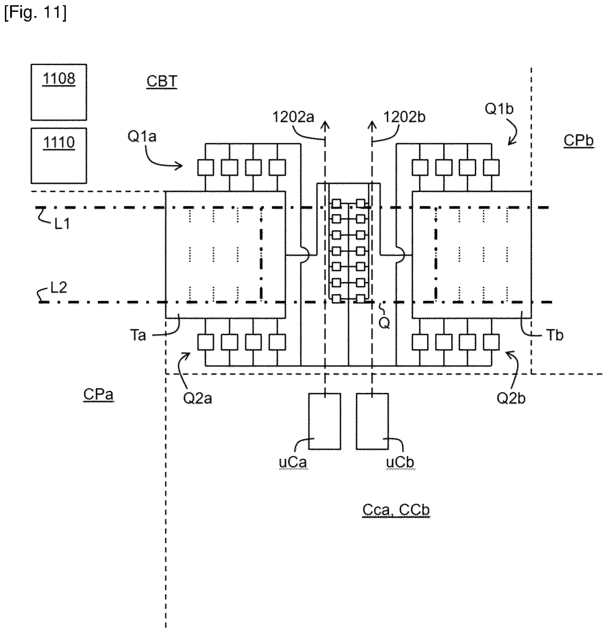

En référence à la figure 11, les bobines secondaires Sa, Sb des transformateurs Ta, Tb sont placées en face l'un de l'autre, de sorte que seul le circuit basse tension CBT s'étende dans la zone de la carte électronique 1102 séparant les bobines secondaires Sa, Sb. Pour définir plus précisément cette zone, on l'assimile à un quadrilatère Q, s'étendant en particulier dans le plan de la carte électronique 1102, avec quatre sommets situés respectivement sur une broche de la borne de première extrémité S1a, une broche de la borne de deuxième extrémité S2a, une broche de la borne de première extrémité S1b, et une broche de la borne de deuxième extrémité S2b. Ainsi, seul le circuit basse tension CBT s'étend dans le quadrilatère Q. En particulier, les circuits primaires CPa, CPb et les bobines primaires Pa, Pb des transformateurs Ta, Tb s'étendent hors du quadrilatère Q. Par exemple, comme dans l'exemple illustré, ce quadrilatère Q est un rectangle. « S'étendre dans le quadrilatère » signifie que la projection orthogonale des éléments (composants et conducteurs) du circuit basse tension CBT dans le plan de la carte électronique 1102 s'étend dans le quadrilatère Q. De même, « S'étendre en-dehors du quadrilatère » signifie que la projection orthogonale des éléments (composants et conducteurs) des circuits primaires CPa, CPb opérant à haute tension dans le plan de la carte électronique 1102 est en-dehors du quadrilatère Q.

Pour obtenir une faible inductance dans chaque boucle, au moins un élément capacitif de la capacité C_{OUT}, de préférence tous les éléments capacitifs, est par exemple situé dans le quadrilatère Q. Ainsi, les éléments capacitifs sont au plus près des deux bobines secondaires, et en particulier de leurs broches, à la fois. En outre, au moins une des bornes S1a, S2a, Ma, S1b, S2b, Mb de la bobine secondaire Sa, Sb d'un premier des transformateurs Ta, Tb est séparée d'au plus 3 cm d'au moins une des bornes S1a, S2a, Ma, S1b, S2b, Mb de la bobine secondaire Sa, Sb de l'autre des transformateurs Ta, Tb. Cela permet de s'assurer que les bobines secondaires Sa, Sb sont suffisamment proches l'une de l'autre pour permettre à la capacité de sortie C_{OUT} d'être proche des deux à la fois.

Par ailleurs, les circuits de commande CCa, CCb s'étendent tous les deux d'un côté en dehors de première et deuxième lignes L1, L2 formant des côtés du quadrilatère Q s'étendant d'un transformateur Ta, Tb à l'autre (les circuits de commande CCa, CCb s'étendent sous la ligne L2 dans l'exemple illustré). Or, chaque circuit de commande CCa, CCb peut avoir besoin d'être connecté à un composant situé en dehors du quadrilatère Q d'un autre côté des lignes L1, L2 que le circuit de commande CCa, CCb (au-dessus de la ligne L1 dans l'exemple illustré).

Par exemple, chaque circuit de commande CCa, CCb peut avoir besoin d'être connecté aux éléments de commutation du commutateur Q1a, Q1b ou bien à des pilotes (non représentés) de ces éléments de commutation, afin de commander ces éléments de commutation

Alternativement, chaque circuit de commande CCb, CCb peut avoir besoin d'être connecté à un capteur de courant 1108 (par exemple, pour mesurer un courant passant dans la sortie basse tension 1106) ou bien de température 1110 (par exemple, pour mesurer une température de la sortie basse tension 1106), pour recevoir les mesures du capteur 1108, 1110.

Pour éviter de devoir faire passer une connexion sous les transformateurs Ta,Tb ou bien au travers des circuits secondaires opérant à haute tension, il est prévu une connexion 1202a, 1202b entre le circuit de commande CCa, CCb et chaque composant auquel ce circuit de commande CCa, CCb doit être connecté, cette connexion 1202a, 1202b traversant le quadrilatère Q au travers des deux lignes L1, L2. « Traverser le quadrilatère » signifie que la projection orthogonale de la connexion 1202a, 1202b dans le plan de la carte électronique 1102 passe par le quadrilatère Q. En pratique, la connexion 1202a, 1202b peut être formée au moins en partie d'une couche interne dans la carte électronique pour passer au-dessus ou bien au-dessous des pistes et/ou des composants du circuit basse tension CBT s'étendant dans le quadrilatère Q, comme les éléments capacitifs de la capacité de sortie C_{OUT}.

La connexion 1202a, 1202b connecte par exemple le microcontrôleur uCa, uCb au composant souhaité.

Ainsi la connexion 1202a, 1202b traverse le circuit basse tension CBT et non les circuits primaires CPa, CPb ce qui aurait nécessité une isolation ou bien une grande distance comme ils opèrent à haute tension.

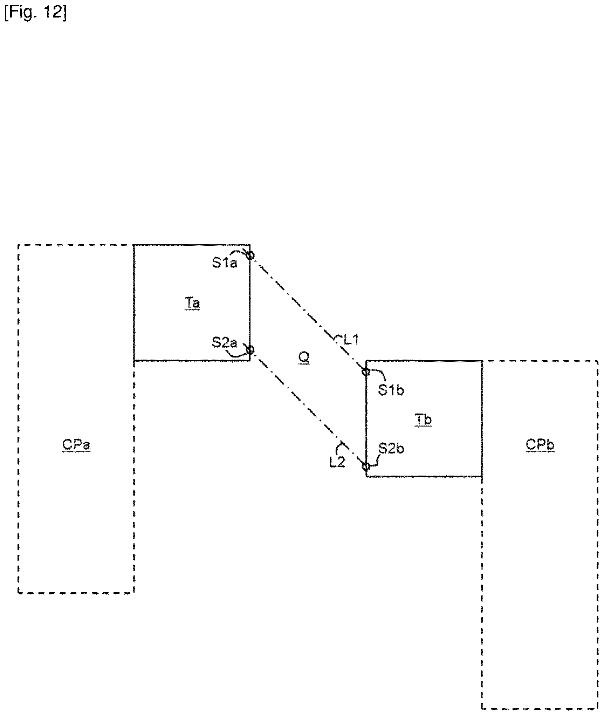

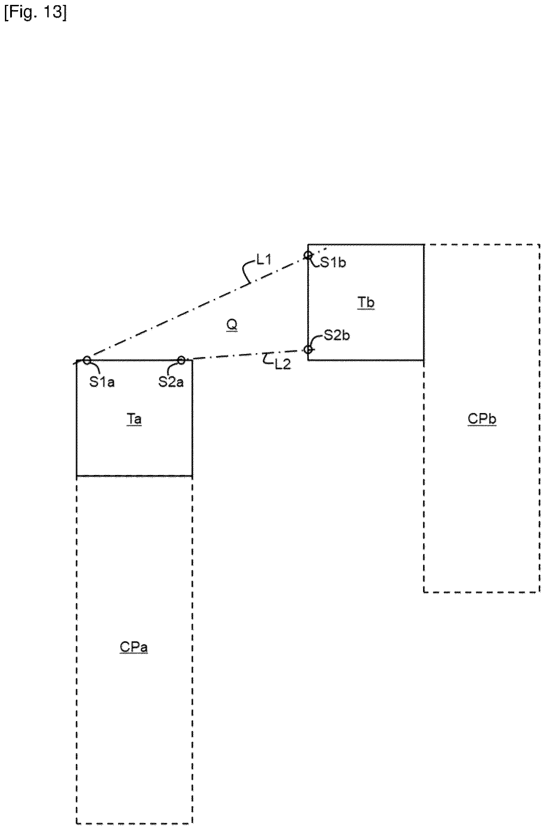

La figure 12 et la figure 13 montrent deux autres agencements possibles des transformateurs Ta, Tb et les quadrilatères Q pouvant être définis dans ce cas.

En conclusion, on notera que l'invention n'est pas limitée aux modes de réalisation décrits précédemment. Il apparaîtra en effet à l'homme de l'art que diverses modifications peuvent être apportées aux modes de réalisation décrits ci-dessus, à la lumière de l'enseignement qui vient de lui être divulgué.

Dans la présentation détaillée de l'invention qui est faite précédemment, les termes utilisés ne doivent pas être interprétés comme limitant l'invention aux modes de réalisation exposés dans la présente description, mais doivent être interprétés pour y inclure tous les équivalents dont la prévision est à la portée de l'homme de l'art en appliquant ses connaissances générales à la mise en oeuvre de l'enseignement qui vient de lui être divulgué.

## Revendications

1. Dispositif de conversion continu-continu (800), comportant :
- une carte électronique (1102) ;
- des premier et deuxième convertisseurs continu-continu (112a, 112b) comportant chacun :
• un transformateur (Ta, Tb) porté par la carte électronique (1102), avec : - une bobine primaire (Pa, Pb), - une bobine secondaire (Sa, Sb), - au moins une broche d'une borne de première extrémité (S1a, S1b) de la bobine secondaire (Sa, Sb), et - au moins une broche d'une borne de deuxième extrémité (S2a, S2b) de la bobine secondaire (Sa, Sb) ;
• un circuit primaire (CPa, CPb) porté par la carte électronique (1102) et connecté à la bobine primaire (Pa, Pb) du transformateur (Ta, Tb) et conçu pour opérer à haute tension ;
• un circuit secondaire (CSa, CSb) porté par la carte électronique (1102) et connecté à la bobine secondaire (Sa, Sb) du transformateur (Ta, Tb) et conçu pour opérer à basse tension, le circuit secondaire (CSa, CSb) comportant au moins un élément de commutation ;
• un circuit de commande (CCa, CCb) porté par la carte électronique (1102) et conçu pour commander l'élément de commutation ;
- un circuit basse tension (CBT) porté par la carte électronique (1102) et incluant au moins les circuits secondaires (CSa, CSb) ;
**caractérisé en ce que** :
- il existe un quadrilatère (Q) avec quatre sommets situés respectivement sur la broche de la borne de première extrémité (S1a) de la bobine secondaire (Sa) du premier transformateur (Ta), la broche de la borne de deuxième extrémité (S2a) de la bobine secondaire (Sa) du premier transformateur (Ta), la broche de la borne de première extrémité (S1b) de la bobine secondaire (Sb) du deuxième transformateur (Tb) et la broche de la borne de deuxième extrémité (S2b) de la bobine secondaire (Sb) du deuxième transformateur (Tb), les circuits primaires haute tension (CPa, CPb) et les bobines primaires (Pa, Pb) des transformateurs (Ta, Tb) s'étendant hors du quadrilatère (Q) ;
- au moins un circuit de commande (CCa, CCb) s'étendant d'un côté en dehors de première et deuxième lignes (L1, L2) formant des côtés du quadrilatère (Q) s'étendant d'un transformateur (Ta, Tb) à l'autre ; et
- le dispositif de conversion continu-continu (800) comporte un composant situé en dehors du quadrilatère (Q) d'un autre côté des lignes (L1, L2) que le circuit de commande (CCa, CCb), ainsi qu'une connexion (1202a, 1202b) entre le circuit de commande (CCa, CCb) et le composant, cette connexion (1202a, 1202b) traversant le quadrilatère (Q) au travers des deux lignes (L1, L2).

2. Dispositif de conversion continu-continu (800) selon la revendication 1, dans lequel le composant est l'élément de commutation ou bien un pilote de cet élément de commutation.

3. Dispositif de conversion continu-continu (800) selon la revendication 1, dans lequel le composant est un capteur (1108, 1110) de courant ou bien de température ou bien de tension et dans lequel la connexion (1202a, 1202b) est conçue pour fournir les mesures du capteur au circuit de commande (CCa, CCb).

4. Dispositif de conversion continu-continu (800) selon l'une quelconque des revendications 1 à 3 comprenant en outre une capacité de sortie (Cₒᵤₜ) ayant au moins un élément capacitif et conçue pour présenter entre deux bornes une tension de sortie (Vₒᵤₜ) du premier et du deuxième convertisseur continu-continu (112a, 112b) et dans lequel le circuit basse tension (CBT) comporte dans le quadrilatère (Q) ledit élément capacitif .

5. Dispositif de conversion continu-continu (800) selon l'une quelconque des revendications 1 à 4, dans lequel la connexion (1202a, 1202b) est formée au moins en partie par une couche interne de la carte électronique (1102).

6. Dispositif de conversion continu-continu (800) selon l'une quelconque des revendications 1 à 5, dans lequel le quadrilatère (Q) est un rectangle.

7. Dispositif de conversion continu-continu (800) selon l'une quelconque des revendications 1 à 6, dans lequel les circuits de commande (CCa, CCb) se trouvent d'un même côté du quadrilatère (Q).

8. Système électrique comportant :
- une première et une deuxième source de tension continue ; et
- un dispositif de conversion continu-continu (800) selon l'une quelconque des revendications 1 à 7, dans lequel le premier convertisseur continu-continu (112a) est connecté à la première source de tension continue pour recevoir sa tension d'entrée (V_{IN}a) et dans lequel le deuxième convertisseur continu-continu (112b) est connecté à la deuxième source de tension continue pour recevoir sa tension d'entrée (V_{IN}b).

9. Engin de mobilité (100) comportant un dispositif de conversion continu-continu (800) selon l'une quelconque des revendications 1 à 7 ou bien un système électrique selon la revendication 8.
